# EUROPÄISCHE PATENTANMELDUNG

(11) **EP 0 910 971 A2**
(43) Veröffentlichungstag der Anmeldung: **28.04.1999**
(21) Anmeldenummer: 98119308.9
(22) Anmeldetag: 13.10.1998
(51) Int. Cl.: A45F 5/02

(54) **Handyclip**

(30) Priorität: 14.10.1997 DE 29718171 U
(71) Anmelder: SIEMENS AKTIENGESELLSCHAFT, 80333 München (DE)
(72) Erfinder: Angele, Boris, 80798 München (DE)

(57) **Zusammenfassung**

Die vorliegende Erfindung bezieht sich auf einen zweiteiligen Handyclip zur Halterung eines tragbaren Telefons im Gürtelbereich einer Person. Das Clipteil (1) ist ein im wesentlichen einstückiges, elastisch verformbares Kunststoffelement, welches auf seiner Außenseite mit einem U-förmigen Bügel (10) zum Einschieben des an dem Kopfbolzenteil (14) vorgesehenen Kopfbolzens (17) versehen ist. Im mittleren Krümmungsbereich des U-förmigen Bügels (10) innerhalb des äußeren Schenkels (3) des Clipteils (1) ist eine Aussparung (13) vorgesehen, innerhalb welcher der jeweilige Kopf (19) des Kopfbolzens (17) im voll eingeschobenen Zustand zum Einrasten gelangt.

## Beschreibung

Die vorliegende Erfindung bezieht sich auf einen zweiteiligen Handyclip zur Halterung eines tragbaren Telefons (Handy) im Gürtelbereich einer Person gemäß dem Oberbegriff des Anspruchs 1.

In den letzten Jahren haben tragbare Telefone, sogenannte Handys, eine immer stärkere Verbreitung gefunden, bei welchen die Telefonverbindung über Funk erfolgt. Derartige Handys sind dabei in etwa quaderförmige Geräte mit Abmessungen im Bereich von etwa 15 x 5 x 1 cm, deren Gewicht aufgrund der sehr komplizierten Elektronik und ebenfalls erforderlichen Akkuzellen bei einigen hundert Gramm liegt.

Da derartige Handys relativ teuere und empfindliche Geräte sind, jedoch von der betreffenden Person während des ganzen Tagesablaufs, d.h. sowohl während der Arbeit als auch während der Freizeit mitgeführt werden, erscheint eine möglichst gute Halterung im Kleidungsbereich der betreffenden Person erforderlich. Dabei erweisen sich die Innen- und Außentaschen von Oberbekleidungsstücken sowie die Außentaschen von Hemden als nicht besonders gut geeignet, weil erfahrungsgemäß Oberbekleidungsstücke während des Tagesablaufs ausgetauscht bzw. bei der Arbeit vielfach abgelegt werden, während bei Plazierung eines Handys in der Außentasche eines Hemdes die Gefahr besteht, daß dieses relativ empfindliche Gerät beim Bücken auf den Boden fällt.

Als geeignetster Ort erscheint demzufolge die Halterung eines Handys am Gürtel einer das betreffende Gerät benutzenden Person. Aus diesem Grunde sind demzufolge bereits Handyclips bekannt, mit welchen das Handy seitlich am Gürtel eingehängt werden kann. Derartige Handyclips bestehen dabei aus zwei voneinander lösbaren Elementen, nämlich einem an dem Gürtel zu befestigenden Clipteil sowie einem an dem jeweiligen Handy zu befestigenden Kopfbolzenteil, wobei letztere einen Kopfbolzen aufweist, der verrastend in dem am Gürtel zu befestigenden Clipteil eingesetzt werden kann.

In diesem Zusammenhang ist ein aus vier verschiedenen Elementen bestehendes Clipteil bekannt, welches aus zwei Cliphälften besteht, die mittels einer elastisch verformbaren metallischen Metallspange untereinander verbunden sind. Die eine Cliphälfte ist dabei mit einer entsprechenden Aussparung versehen, in welcher der Kopfbolzen des an dem Handy befestigten Kopfbolzenteils verrastend eingeführt werden kann, wobei zusätzlich noch eine manuell zu betätigende Sperre vorgesehen ist, um das Handy mit seinem Kopfbolzenteil von dem Clipteil wieder abziehen zu können.

Unter Berücksichtigung dieses Standes der Technik ist es Aufgabe der vorliegenden Erfindung, einen Handyclip zu schaffen, welcher bei sehr einfacher Bedienbarkeit aus einer möglichst geringen Anzahl von Einzelelementen besteht, wodurch die Zuverlässigkeit der korrekten Funktionsweise eines derartigen Handyclips verbessert wird, während gleichzeitig die sich ergebenden Herstellungskosten verringert werden können.

Erfindungsgemäß wird dies durch Vorsehen der im kennzeichnenden Teil des Anspruchs 1 aufgeführten Merkmale erreicht.

Vorteilhafte Weiterbildungen des erfindungsgemäßen Handyclips ergeben sich anhand der Ansprüche 2 bis 15.

Die Erfindung soll nunmehr näher erläutert und beschrieben werden, wobei auf die beigefügte Zeichnung Bezug genommen ist. Es zeigen:
Figuren 1 bis 3 verschiedene perspektivische Ansichten des erfindungsgemäßen Clipteils und
Figur 4 eine perspektivische Ansicht einer zweckmäßigen Ausführungsform des in Verbindung mit dem Clipteil der Figuren 1 bis 3 verwendeten Kopfbolzenteils.

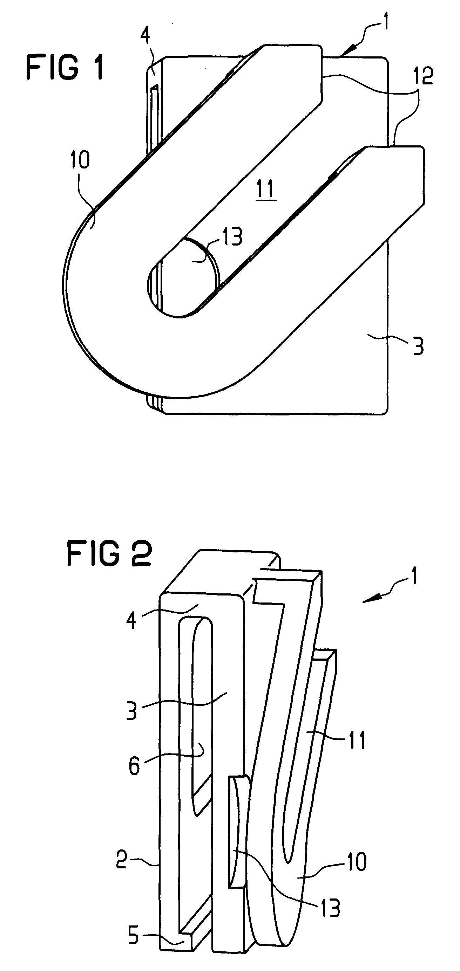

Figuren 1 bis 3 zeigen den Clipteil 1 in verschiedenen räumlichen Winkellagen. Dieser Clipteil 1 ist dabei ein im wesentlichen einstückiges Element, welches aus einem elastischem Kunststoff gefertigt ist. Dieser Clipteil 1 besitzt dabei zwei in etwa rechteckförmige Schenkel 2 und 3, welche unter Ausbildung eines Joches 4 untereinander verbunden sind. In den zwischen den beiden Schenkeln 2 und 3 gebildeten Schlitz wird dabei der Gürtel, der das jeweilige Handy benutzenden Person derart eingeschoben, daß das Joch 4 auf der oberen Kante des Gürtels zum Aufliegen gelangt. Der eine Schenkel 2 liegt dabei in bezug auf den Gürtel auf der Innenseite, während der andere Schenkel 3 den Gürtel von außen her umschließt. Nach unten hinten weist der innere Schenkel 2 einen in Richtung des Gürtels ragenden Steg 5 auf, welcher verhindert, daß das Clipteil 1 sich in ungewünschter Weise vom Gürtel lösen kann. Der Steg 5 bildet demzufolge einen Anschlag im Bereich der unteren Kante des verwendeten Gürtels.

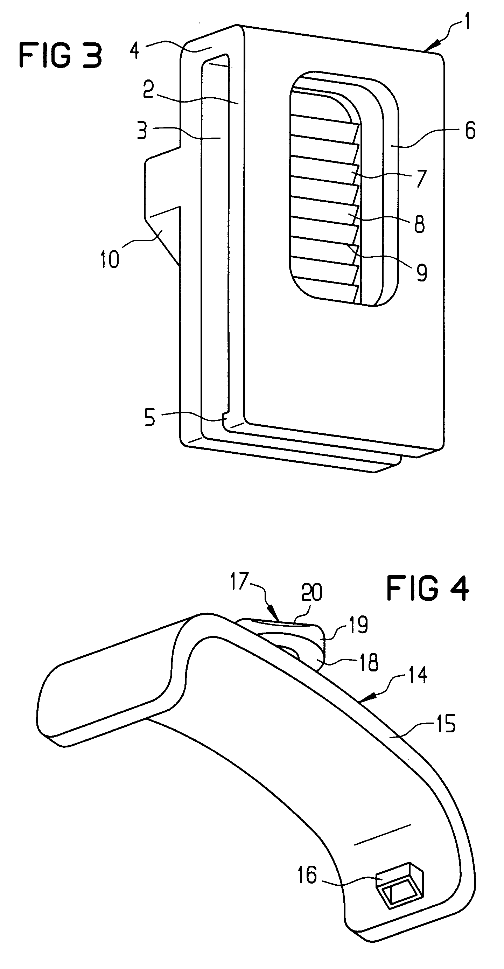

Gemäß Figur 3 ist der innere Schenkel 2 zusätzlich mit einem in etwa rechteckigen Fenster 6 versehen, gegenüber welchem auf der Innenseite des äußeren Schenkels 3 eine in etwa 1 mm tiefe Absenkung 7 vorgesehen ist. In diese Absenkung 7 ist ein Flachgummielement 8 eingeklebt, welches auf seiner Außenfläche mit einem Sägezahnprofil 9 versehen ist. Dieses Sägezahnprofil 9 besitzt dabei eine derartige Orientierung, daß ein ungewünschtes Hochrutschen des Clipteils 1 gegenüber dem zwischen den beiden Schenkeln 2 und 3 liegenden Gürtel zusätzlich noch erschwert wird.

Entsprechend Figuren 1 und 2 ist auf der Außenseite des äußeren Schenkels 3 und zwar im Bereich des Joches 4 ein in etwa U-förmiger Bügel 10 angeformt. Die Halterung dieses Bügels 10 an dem äußeren Schenkel 3 des Clipteils 1 erfolgt dabei im Bereich der beiden Bügelenden, wobei der Bügel 10 in etwa parallel zu der Außenfläche des Schenkels 3 geführt ist. Entsprechend Figur 1 erfolgt die Halterung der beiden Enden des U-förmigen Bügels 10 an der Außenfläche des äußeren Schenkels 3 derart, daß die Längsachse des U-förmigen Bügels 10 in etwa unter 45 Grad zu der Längsachse des aus den beiden rechteckigen Schenkeln 2 und 3 bestehenden Clipteils 1 verläuft. Zwischen den beiden Schenkein des U-förmigen Bügels 10 wird dabei ein länglicher Schlitz 11 gebildet, welcher der Aufnahme eines in Verbindung mit Figur 4 noch zu beschreibenden Kopfbolzens dient.

Auf folgende Besonderheiten des Clipteils 1 sei in diesem Zusammenhang noch hingewiesen:
1. Gemäß Figur 1 weist der U-förmige Bügel 10 im Bereich seiner beiden Bügelenden jeweils unter 45 Grad verlaufende Schrägflächen 12 auf, welche das Einführen des in dem Folgenden noch zu beschreibenden Kopfbolzens erleichtert.
2. Gemäß Figur 2 ist der U-förmige Bügel 10 im Ruhezustand geringfügig angewinkelt gegenüber der Außenfläche des äußeren Schenkels 3 angesetzt, so daß beim Einschieben des in dem folgenden noch zu beschreibenden Kopfbolzens aufgrund der Eigenelastizität des U-förmigen Bügels 10 ein zunehmender Druck auf den Kopfbolzen in Richtung der Außenfläche des äußeren Schenkels 3 ausgeübt wird.
3. Gemäß Figuren 1 und 2 ist der äußere Schenkel 3 des Clipteils 1 im Bereich seiner seitlichen Kante und zwar unterhalb des Endes des länglichen Schlitzes 11 mit einer halbkreisförmigen Aussparung 13 versehen, innerhalb welcher der in dem folgenden noch zu beschreibende Kopfbolzen im voll eingeschobenen Zustand unter Ausnutzung der Eigenelastizität des U-förmigen Bügels 10 zum Einrasten gelangt.

Figur 4 zeigt eine besondere Ausführungsform eines im Rahmen der Erfindung zu verwendenden Kopfbolzenteils 14. Dieses Kopfbolzenteil 14 ist ein ebenfalls einstückig gefertigtes, elastisch verformbares Kunststoffteil. Dasselbe besteht dabei im wesentlichen aus einer elastischen Spange 15, welche in bezug auf ihre Formgebung dem Außenprofil der unteren Gehäusehälfte eines zu befestigenden Handys angepaßt ist. Diese elastische Spange 15 weist im Bereich ihrer beiden Enden nach innen ragende Vorsprünge 16 auf, welche beim Aufpressen auf das Handygehäuse innerhalb eines zwischen den beiden Gehäusehälften des Handys vorhandenen Schlitzes zum Einrasten gelangen.

In seinem mittleren Bereich weist die elastische Spange 15 nach oben hin einen im wesentlichen runden Kopfbolzen 17 auf, welcher aus einem dünneren Bolzenschaft 18 und einem dickeren Bolzenkopf 19 besteht. Die Dicke des Bolzenschaftes 18 ist dabei etwas geringer als die Breite des zwischen den beiden Schenkeln des U-förmigen Bügels 10 gebildeten länglichen Schlitzes 11 gewählt, so daß der betreffende Kopfbolzen 17 unter Ausnutzung der beiden Schrägflächen 12 in den U-förmigen Bügel 10 eingeführt werden kann. Die Dicke des Bolzenkopfes 19 in axialer Richtung ist wiederum derart gewählt, daß der Einführungsvorgang zumindest im Anfangsbereich des U-förmigen Bügels 10 möglichst kraftfrei erfolgen kann. Aufgrund der Formung des U-förmigen Bügels 10 wird jedoch beim Weiterschieben des Kopfbolzens 17 ein zunehmender Druck auf den elastisch verformbaren U-förmigen Bügel 10 ausgeübt, so daß nach erfolgtem Einschieben des Bolzenschaftes 18 bis an das Ende des länglichen Schlitzes 11 ein Verrasten des Bolzenkopfes 19 innerhalb der halbkreisförmigen Aussparung 13 des äußeren Schenkels 3 erfolgt. Der Durchmesser des Bolzenkopfes 19 ist dabei geringfügig kleiner gewählt als der Durchmesser der halbkreisförmigen Aussparung 13.

Die Stirnfläche des Bolzenkopfes 19 ist schließlich noch mit einer sichelförmigen Schrägfläche 20 versehen, welche es gestattet, daß in einer einzigen Winkellage des ansonsten frei um den Kopfbolzen 17 herumschwenkbaren Handys eine Entnahme des Handys aus der verriegelten Position des Bolzenkopfes 9 aus der halbkreisförmigen Aussparung 13 und damit eine Entriegelung möglich ist. Die Winkellage der sichelförmigen Schrägfläche 20 ist dabei derart gewählt, daß bei einer Positionierung des Clipteils 1 auf der rechten Gürtelseite das Handy um 90 Grad nach rückwärts geschwenkt werden muß, bevor durch die sichelförmige Schrägfläche 20 eine leichte Freigabe des Kopfbolzens 17 gegenüber der innerhalb des äußeren Schenkels 3 vorgesehenen halbkreisförmigen Aussparung 13 stattfinden kann, worauf ein Herausziehen des Handys entlang des in etwa unter 45 Grad verlaufenden länglichen Schlitzes 11 schräg nach oben hin möglich ist.

In Abwandlung des erfindungsgemäßen Gedankens kann der Kopfbolzen 17 ebenfalls an einer nicht dargestellten Platte befestigt sein, die dann mittels Schrauben an dem jeweiligen Handy befestigt wird. Im Rahmen der Erfindung besteht fernerhin die Möglichkeit, daß der betreffende Kopfbolzen 17 Teil einer biegsam ausgebildeten Handytasche ist, in welche das betreffende Handy eingesetzt werden kann. Schließlich besteht noch die Möglichkeit, daß der betreffende Kopfbolzen 17 unmittelbar Teil des jeweiligen Handygehäuses ist, bzw. unter Einsatz einer drehfesten Verbindung innerhalb einer bereits vorhandenen Bohrung des Handygehäuses befestigt werden kann.

Es ist einleuchtend, daß im Rahmen der Erfindung der U-förmige Bügel 10 einschließlich die Aussparung 13 und der Kopfbolzen 17 positionsmäßig vertauscht sein können, indem der Kopfbolzen 17 an dem gürtelseitig zu befestigenden Clipteil 1 vorgesehen ist, während der U-förmige Bügel 10 sowie die der Verrastung dienende Aussparung 13 an dem handyseitig zu befestigenden Teil 14 angeordnet sind.

## Patentansprüche

1. Handyclip zur Halterung eines tragbaren Telefons (Handy) im Gürtelbereich einer Person, bestehend aus einem an dem Gürtel der jeweiligen Person festklemmbaren Clipteil sowie einem handyseitig vorgesehenen Kopfbolzenteil, dessen Kopfbolzen elastisch verrastend in dem Cliptell einschiebbar ist,
**dadurch gekennzeichnet,**
daß das Clipteil (1) ein im wesentlichen einstückiges, elastisch verformbares Kunststoffelement ist, welches auf seiner Außenseite mit einem U-förmigen Bügel (10) zum Einschieben des an dem Kopfbolzenteil (14) vorgesehenen Kopfbolzens (17) versehen ist, und daß im mittleren Krümmungsbereich des U-förmigen Bügels (10) innerhalb des äußeren Schenkels (3) des Clipteils (1) eine Aussparung (13) vorgesehen ist, innerhalb welcher der jeweilige Kopf (19) des Kopfbolzens (17) im voll eingeschobenen Zustand zum Einrasten gelangt.

2. Handyclip nach Anspruch 1,
**dadurch gekennzeichnet,**
daß der U-förmige Bügel (10) des Clipteils (1) in bezug auf die beiden Schenkel (2, 3) in etwa unter 45 Grad angeordnet ist.

3. Handyclip nach Anspruch 1 oder 2,
**dadurch gekennzeichnet,**
daß der U-förmige Bügel (10) im Einführungsbereich des Kopfbolzens (17) unter 45 Grad verlaufende Schrägflächen (12) aufweist.

4. Handyclip nach einem der Ansprüche 1 bis 3,
**dadurch gekennzeichnet,**
daß der U-förmige Bügel (10) im Bereich seiner beiden Bügelenden an dem Clipteil (1) angeformt ist und im Ruhezustand geringfügig geneigt in Richtung auf die Außenfläche des äußeren Schenkels (3) des Clipteils (1) zugeführt ist.

5. Handyclip nach einem der vorangegangenen Ansprüche,
**dadurch gekennzeichnet,**
daß die beiden Schenkel (2, 3) des Clipteils (1) in etwa rechteckig ausgebildet sind, und daß vorzugsweise an dem Ende des in bezug auf den Gürtel innenliegenden Schenkels (1) ein in Richtung des Gürtels ragender Steg (5) angeformt ist, welcher an der Unterkante des Gürtels zum Anliegen gelangt.

6. Handyclip nach Anspruch 5,
**dadurch gekennzeichnet,**
daß der innere Schenkel (2) des Clipteils (1) mit einem in etwa rechteckförmigen Fenster (6) versehen ist, und daß auf der Innenseite des äußeren Schenkels (3) gegenüberliegend zu dem rechteckigen Fenster (6) eine entsprechend geformte Absenkung (7) vorgesehen ist, in welcher ein der Rutschsicherung gegenüber dem Gürtel dienendes Flachgummielement (8) eingeklebt ist.

7. Handyclip nach Anspruch 6,
**dadurch gekennzeichnet,**
daß das Flachgummielement (8) auf seiner Außenseite mit einem ein ungewünschtes Herausziehen gegenüber dem Gürtel erschwerenden Sägezahnprofil (9) versehen ist.

8. Handyclip nach einem der vorangegangenen Ansprüche,
**dadurch gekennzeichnet,**
daß die vordere Fläche des Bolzenkopfes (19) des Kopfbolzens (17) mit einer Schrägfläche (20) versehen ist, welche ein im wesentlichen kraftfreies Herausziehen des Handys aus dem Clipteil 1 nur in einer einzigen Winkellage erlaubt.

9. Handyclip nach Anspruch 8,
**dadurch gekennzeichnet,**
daß die Schrägfläche (20) an der vorderen Fläche des Bolzenkopfes (19) derart angeordnet ist, daß bei Einklemmung des Clipteils (1) an der rechten Gürtelseite das Handy nur aus einer um 90 Grad zurückgeschwenkten Position heraus ohne größeren Kraftaufwand schräg nach oben aus dem U-förmigen Bügel 10 des Clipteils 1 herausziehbar ist.

10. Handyclip nach Anspruch 8 oder 9,
**dadurch gekennzeichnet,**
daß die innerhalb des äußeren Schenkels (3) des Clipteils (1) vorgesehene Aussparung (13) entsprechend dem Durchmesser des Bolzenkopfes (19) des Kopfbolzens (17) kreisförmig ausgebildet ist, und daß die auf der vorderen Fläche des Bolzenkopfes (19) vorgesehene Schrägfläche (20) eine Sichelkonfiguration aufweist.

11. Handyclip nach einem der Ansprüche 1 bis 10,
**dadurch gekennzeichnet,**
daß der Kopfbolzenteil (14) in Form einer aus einem elastischem Kunststoff bestehenden Spange (15) ausgebildet ist, welche an ihren Spangenenden mit nach innen ragenden Vorsprüngen (16) versehen ist, die beim Aufdrücken der elastischen Spange (15) in einem zwischen den beiden Gehäusehälften des Handys vorgesehen Spalt zum Einrasten gelangen.

12. Handyclip nach einem der Ansprüche 1 bis 10,
**dadurch gekennzeichnet,**
daß der Kopfbolzenteil (14) mit einer Halteplatte versehen ist, die mittels Schrauben an dem Handygehäuse befestigbar ist.

13. Handyclip nach einem der Ansprüche 1 bis 10,
**dadurch gekennzeichnet,**
daß der Kopfbolzenteil (14) Teil einer der Aufnahme des Handys dienenden Handytasche ist,

14. Handyclip nach einem der Ansprüche 1 bis 10,
**dadurch gekennzeichnet,**
daß der Kopfbolzen (17) unmittelbar Teil des Handygehäuses ist.

15. Handyclip nach einem der vorangegangenen Ansprüche,
**dadurch gekennzeichnet,**
daß der U-förmige Bügel (10) sowie die der Verrastung dienende Aussparung (13) und der Kopfbolzen (17) in bezug auf die Kunststoffelemente (1) und (14) positionsmäßig vertauscht sind.
